# EUROPEAN PATENT APPLICATION

(11) **EP 1 701 539 A2**
(43) Date of publication of application: **13.09.2006**
(21) Application number: 06002547.5
(22) Date of filing: 08.02.2006
(51) Int. Cl.: H04N 5/445

(54) **Television program alert device and method**

(30) Priority: 10.03.2005 CN 200510053451
(71) Applicant: BenQ Corporation, Gueishan Taoyung 333 (TW)
(72) Inventor: Lin, Chia-Hung, Taoyuan County 330 Taiwan (CN)
(74) Representative: KEIL & SCHAAFHAUSEN Patentanwälte

(57) **Abstract**

A digital TV comprises a processor, a communication unit, an output unit, a memory, and a clock. The communication unit receives an electronic program guide (EPG) with program titles corresponding to showtimes. The memory stores selected information corresponding to a selected program title in the EPG data. When the clock reaches a predetermined time before the showtime of the selected program title, the processor outputs a program alert signal utilizing the output unit.

## Description

### BACKGROUND

The invention relates to digital TVs, and in particular, to TV program alert methods, digital TVs and electronic devices.

A sequence of TV programs (hereafter referred to as program) can be delivered through a TV broadcast channel, whereby each program is played at a respective time. Programs, however, may be missed by viewers. Conventionally, analog TVs display programs without attention to beginnings and ends thereof. Although time schedules of programs are available, remembering or recording showtimes can be inconvenient for viewers.

### SUMMARY

Accordingly, digital televisions and electronic devices with program alert function, and methods thereof are provided.

An exemplary embodiment of digital TV comprises a first communication unit, a first input unit, a first memory, a first clock, a first output unit, and a first processor coupled to the first communication unit, the first input unit, the first memory, the first output unit, and the first clock. The first communication unit receives and demodulates a digital signal from a digital TV broadcaster, and the first processor decodes the digital signal to get an electronic program guide (EPG), wherein the EPG comprises a showtime of a TV program. The first input unit receives a setting comprising information corresponding to the TV program. The setting is set by the viewer upon his need. The first memory stores the setting.

When determining that the first clock has reached a first predetermined time corresponding to the setting before the showtime of the TV program, the first processor directs the first output unit to provide a first program alert signal. The first communication unit may be or comprise a tuner, and may further receive a time signal from the digital TV broadcaster so that the first clock is synchronized with the time signal. The first processor may comprise a CPU and a MPEG decoder for decoding the digital signal.

An exemplary embodiment of an electronic device, for receiving a setting of an electronic program guide (EPG) from a digital TV, comprises a second communication unit, a second memory, a second output unit, a second clock, and a second processor coupled to the second communication unit, the second memory, the second output unit, and the second clock. The EPG received and demodulated by the digital TV from a digital TV broadcaster comprises a showtime of a TV program. The setting comprises information corresponding to the TV program that is selected by the viewer. The second communication unit receives the setting. The second memory stores the setting. When determining that the second clock has reached a second predetermined time corresponding to the setting before the showtime of the TV program, the second processor directs the second output unit to provide a second program alert signal. The second communication unit may further receive a time signal from the digital TV so that the second clock is synchronized with the time signal.

An exemplary embodiment of a program alert method, implemented in a digital TV, comprises the steps of: (a) receiving an electronic program guide (EPG) which comprises a showtime of a TV program; (b) receiving a setting which comprises information corresponding to the TV program, and storing the setting; and (c) outputting a program alert signal when a predetermined adjustable time corresponding to the setting before the showtime of the TV program is reached. Step (a) may further comprise displaying the EPG. Step (b) may further comprise displaying the setting. Between step (b) and step (c), the method may further comprise: (b-1) comparing the setting with the EPG, and when determining that the setting is to be updated, updating the setting according to the EPG. Further, in step (b-1) if the setting is updated, in step (c) the program alert signal is outputted based on the updated setting. If the updated setting shows that the showtime is canceled, in step (c) the program alert signal comprises a message that the showtime is canceled. After step (c), the method may further comprise the step of: (d) playing the TV program when the showtime of the TV program is reached. The program alert signal may comprise an audio signal of the TV program, a predetermined music, a predetermined ring, a video signal of a predetermined text, a still image or an animation.

### DESCRIPTION OF THE DRAWINGS

The invention can be more fully understood by reading the subsequent detailed description and examples with references made to the accompanying drawings, wherein:
- Fig. 1: is a block diagram of an exemplary embodiment of a digital TV system;
- Fig. 2: is a flowchart of TV program alert function operation within a digital TV;
- Fig. 3: is a flowchart of operation of a digital TV with an updated electronic program guide (EPG);
- Fig. 4: is a block diagram of another exemplary embodiment of a digital TV system;
- Fig. 5: is a flowchart of TV program alert operation of a portable electronic device; and
- Fig. 6: is a flowchart of operation of the portable electronic device after an EPG is updated.

### DETAILED DESCRIPTION

Broadcasters can publish the latest TV program schedules utilizing electronic program guide (EPG). Unlike conventional TV guides within TV signals being processed as image data by analog TVs, broadcasters encapsulate EPGs in a special packet format for submission, whereby, after receiving and demodulating the EPGs, digital TVs can identify and further process the EPGs. Digital TVs and systems with program alert functions are described.

### First embodiment

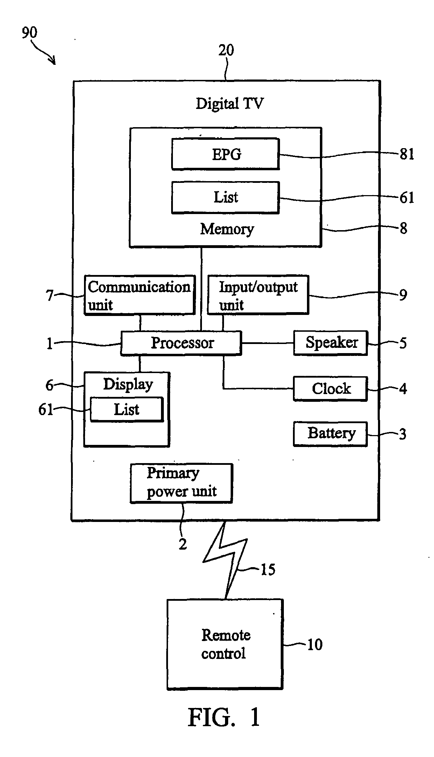

Referring to Fig. 1, digital TV system 90 comprises digital TV 20 and remote control 10. Digital TV 20 communicates with remote control 10 through communication channel 15.

In digital TV 20 of Fig. 1, processor 1 is coupled to primary power unit 2, battery 3, clock 4, speaker 5, display 6, communication unit 7, memory 8, and input/output unit 9. Primary power unit 2 supplies power to digital TV 20. Battery 3 supplies power to clock 4.The communication unit 7 may comprise a tuner.

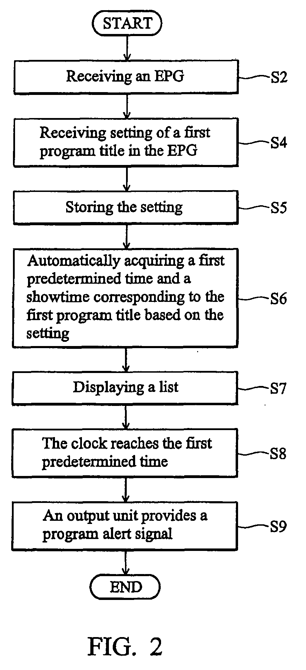

With cross reference to Fig. 2, communication unit 7 receives and demodulates a digital signal from a digital TV broadcaster (not shown) through a wired or wireless channel, and the processor 1 decodes the digital signal to get EPG 81 (step S2). EPG 81 comprises a plurality of program titles each of which corresponds to a showtime. Note that an EPG may include more information, such as program introduction, types, duration, and other attributes thereof. Digital TV 20 provides an interface, such as on-screen display modules and input/output unit 9, by which the program titles within EPG 81 can be selected (or configured).

Processor 1 receives a setting of a first program title in EPG 81 through the interface (step S4) and stores the setting in memory 8 (step S5). Processor 1 automatically acquires a first predetermined time and a showtime corresponding to the first program title based on the setting (step S6). For example, a user can configure the setting of the first program title using remote control 10 or input/output unit 9. In the setting, the first program title corresponds to a first program decided by the user. Thus, after a user selects a program title from an EPG and sets a predetermined time the same as or before the showtime of the selected program for notification, the selected program's title, showtime, and the predetermined time are stored in the setting. The predetermined time is adjustable. Note that processor 1 can receive the setting for multiple TV programs upon the user's need.

Processor 1 displays list 61 of titles and showtimes (such as the first program title, showtime, and the first predetermined time) of selected programs on display 6 (step S7). The setting stored in memory 8 may be edited (added or removed) using input/output unit 9. According to the setting, when clock 4 reaches the first predetermined time corresponding to the first program title (step S8), processor 1 outputs a program alert signal utilizing an output unit. The program alert signal comprises notification that clock 4 has achieved the first predetermined time (step S9). The output unit may comprise speaker 5, display 6, communication unit 7, or input/output unit 9. For example, processor 1 provides audible signals (such as audio signals of the first program or other music and ring tones) through speaker 5, visible signals (such as text, still images, or animated images) through display 6, notification to remote control 10 through communication unit 7, and/or other signals through input/output unit 9.

For example, after receiving notification from digital TV, remote control 10 may further output corresponding signals, such as visible signals (such as reminding text, still images, or animated images), audible signals (such as music, ring tones, and audio signals of the first program), and/or triggers vibration of the remote control 10.

Processor 1 can receive a setting of music, ring tones, text, and still or animated images stored previously in memory 8 through input/output unit 9. When clock 4 has reached the first predetermined time corresponding to the first program title, processor 1 provides predetermined music, ring tones, text, still images, or animated images as the program alert signal utilizing speaker 5 and display 6. As well, when clock 4 has reached the showtime corresponding to the first program title, processor 1 may automatically direct display 6 to show content of a channel corresponding to the first program title, i.e. the channel where the first program is located. Similarly, when corresponding determined times of other selected program titles arrive, processor 1 accordingly outputs program alert signals utilizing an output unit. When showtimes corresponding to other program titles in the setting arrive, processor 1 may automatically direct display 6 to show contents of the channels corresponding to other program titles.

When the primary power unit 2 does not provide power, battery 3 supplies power to processor 1 to determine whether a predetermined time corresponding to a selected program arrives and to output program alert signals accordingly.

Note that processor 1 can receive other setting of the EPG. Processor 1 compares the setting with the EPG stored in memory 8. When determining that the setting is to be updated due to some changes in the EPG, processor 1 updates the setting according to the EPG. An example is subsequently described.

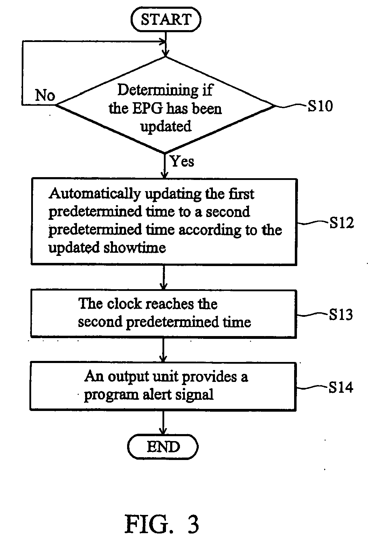

Referring to Fig. 3, processor 1 determines if the EPG has been updated (step S10). When the showtime of the first program title has been updated, processor 1 automatically updates the first predetermined time to a second predetermined time corresponding to the updated showtime accordingly (step S12), and when clock 4 has reached the second predetermined time (step S13), processor 1 provides a program alert signal utilizing an output unit (step S14). For example, in the setting, a showtime and a first predetermined time of a TV program A are respectively 17:00 and 16:00, that is, digital TV 20 performs program alert function one hour before showtime of the TV program A. When processor 1 determines that the showtime of the TV program A in list 61 should be updated to 15:00 according to updated EPG 81 (step S10), processor 1 not only updates the showtime of the TV program A in list 61 to 15:00 but also updates the first predetermined time 16:00 to a second predetermined time 14:00 (i.e. one hour before the showtime) (step S12). When clock 4 achieves the second predetermined time 14:00 (step S13), processor 1 directs an output unit to provide program alert signals (step S14). Thus, after EPG 81 is updated, digital TV 20 performs program alert function according to the second predetermined time. When the updated setting states that the showtime has been canceled, the program alert signal comprises a corresponding message. The communication unit 7 may be or comprise a tuner, and may further receive a time signal from the digital TV broadcaster so that the clock 4 is synchronized with the time signal. The processor 1 may comprise a CPU and a MPEG decoder for decoding the digital signal. The program alert signal may be or comprise an audio signal of the TV program, a predetermined music, a predetermined ring, a video signal of a predetermined text, a still image or an animation.

Note that in addition to a digital TV, other electronic device implementing the disclosure may also fall within the scope of this invention as long as the electronic device meets the characteristics disclosed above, and that the remote control may be another portable electronic device, such as a cell phone, a personal digital assistant (PDA), or a laptop. Another exemplary embodiment is described in the following.

### Second embodiment

Digital TVs and electronic devices with program alert functions are now described.

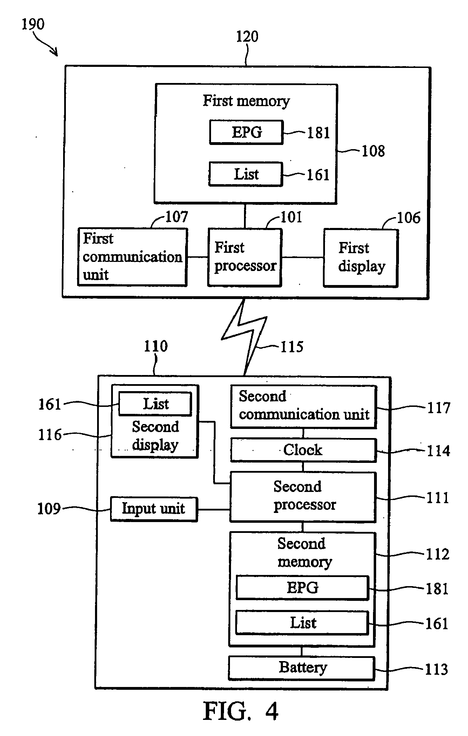

Referring to Fig. 4, digital TV system 190 comprises digital TV 120 and portable electronic device 110. Digital TV 120 communicates with portable electronic device 110 through channel 115.

In digital TV 120 of Fig. 4, first processor 101 is coupled to first display 106, first communication unit 107, and first memory 108. The first communication unit 107 may be or comprise a tuner. The first processor 101 may comprise a CPU and a MPEG decoder for decoding digital signals. In portable electronic device 110 of Fig. 4, second processor 111 is coupled to second memory 112, clock 114, second communication unit 117, second display 116, and input unit 109. Battery 113 supplies power to portable electronic device 110.

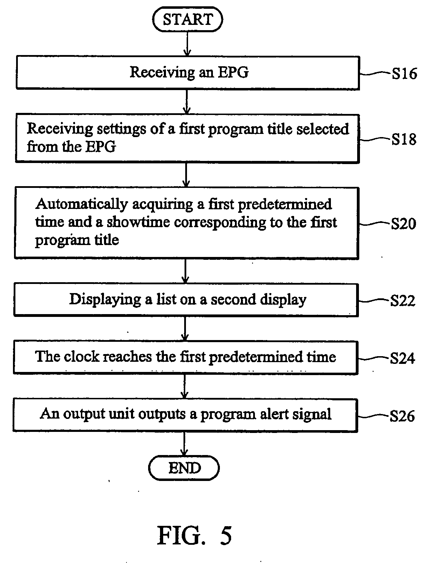

With cross reference to Fig. 5, first communication unit 107 receives and demodulates a digital signal from a digital TV broadcaster (not shown) through a wired or wireless channel, and the first processor 101 decodes the digital signal to get EPG 181 (step S16). EPG 181 is stored in first memory 108 and comprises a plurality of program titles each of which corresponds to a TV program and a showtime thereof. After a user selects program titles from the EPG and sets predetermined times before the showtimes of the selected programs for notification, all of the selected program titles, showtimes, and the predetermined times are collected into a setting.

In portable electronic device 110, second communication unit 117 receives the setting of a first program title selected from the EPG (step S18). The setting may be stored in second memory 112. Second processor 111 may automatically acquire a first predetermined time and a showtime corresponding to the first program title based on the setting (step S20). The first predetermined time is a time the same as or prior to the showtime corresponding to the first program title so that the viewer can be reminded of the program, and it is adjustable. Note that second processor 111 can receive the setting of multiple TV programs.

For example, digital TV 120 may provide an interface for selection of the first program title within the EPG, similar to those described in the first embodiment, and transmits the setting of the first program title to portable electronic device 110 through communication channel 115. In other words, the setting of the first program title may be configured by a user using digital TV 120 or portable electronic device 110, and then transmitted from digital TV 120 to portable electronic device 110. The setting may comprise list 161 containing the selected program titles and time information thereof (such as the first program title, the showtime, and the first predetermined time). Portable electronic device 110 receives list 161 from digital TV 120 and displays list 161 on second display 116 (step S22).

In another example, first communication unit 107 transmits the EPG to second communication unit 117. Second processor 111 displays the EPG on second display 116 and stores it in second memory 112. Second processor 111 provides an interface on second display 116 allowing program titles to be selected from the EPG, and receives a setting of at least one program title (such the first program title) through input unit 109. Portable electronic device 110 may display list 161 of selected titles and showtimes (such as the first program title and the first predetermined time) on second display 116.

According to the setting, when clock 114 has reached the first predetermined time corresponding to the first program title (step S24), second processor 111 outputs a program alert signal utilizing an output unit. The program alert signal comprises notification that clock 114 has reached the first predetermined time (step S26). For example, second processor 111 can provide audible signals through a speaker, visible signals through second display 116, notification to other electronic devices through second communication unit 117, and/or other signals through other input/output units. Similarly, when predetermined times corresponding to other program titles arrive, second processor 111 outputs program alert signals utilizing an output unit.

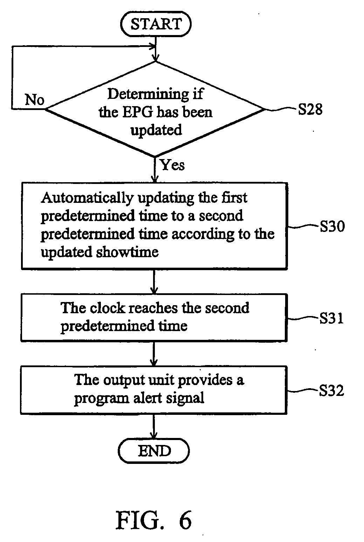

Additionally, referring to Fig. 6, second processor 111 determines if the EPG has been updated (step S28). For example, second processor 111 may periodically determine if the showtime of a selected program title has been updated by inquiring digital TV 20 and getting the response thereof. Alternatively, digital TV 20 may determine if the showtime of a selected program title has been updated and notify portable electronic device 110 when the showtime is updated. In portable electronic device 110, second processor 111 automatically updates the first predetermined time to a second predetermined time corresponding to the updated showtime accordingly (step S30). If the first predetermined time is updated to a second predetermined time, when clock 114 achieves the second predetermined time (step S31), second processor 111 provides a program alert signal utilizing the output unit (step S32). For example, in the setting, a showtime and a first predetermined time of a TV program A are respectively 17:00 and 16:00, i.e. that portable electronic device 110 will perform program alert function one hour before the showtime of the TV program A. When the showtime of the TV program A is updated to 15:00 according to the updated EPG, second processor 111 not only updates the showtime of the TV program A in the setting to 15:00 but also updates the first predetermined time 16:00 to a second predetermined time 14:00 (i.e. one hour before the showtime). Thus, after the EPG is updated, portable electronic device 110 performs program alert function according to the second predetermined time. When the updated setting states that the showtime is canceled, the program alert signal comprises a message that the showtime has been canceled. The second communication unit 117 may further receive a time signal from the digital TV 120 so that the clock 114 is synchronized with the time signal. The program alert signal may be or comprise an audio signal of the TV program, a predetermined music, a predetermined ring, a video signal of a predetermined text, a still image or an animation, and/or may trigger vibration of the portable electronic device.

Thus, the digital TV and the portable electronic device receive a setting of a program referred to an EPG acquired from a broadcaster and perform program alert function at a predetermined time corresponding to the program.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An electronic device with program alert function, comprising:
a first communication unit for receiving an electronic program guide (EPG) from a digital TV broadcaster, wherein the EPG comprises a showtime of a TV program;
a first input unit for receiving a setting comprising information corresponding to the TV program;
a first memory for storing the setting;
a first clock;
a first output unit; and
a first processor coupled to the first communication unit, the first input unit, the first memory, the first output unit, and the first clock, when determining that the first clock has reached a first predetermined time stored in the setting before the showtime of the TV program, directing the first output unit to provide a first program alert signal.

2. The electronic device as claimed in claim 1, wherein when the first processor compares the setting with the EPG and determines that the setting is to be updated, the first processor updates the setting according to the EPG.

3. The electronic device as claimed in claim 2, wherein after the setting is updated, the first processor directs the first output unit to provide the first program alert signal based on the updated setting.

4. The electronic device as claimed in claim 3, wherein when the updated setting states that the showtime is canceled, the first program alert signal comprises a message that the showtime has been canceled.

5. The electronic device as claimed in claim 1, wherein when determining that the clock has reached the showtime of the TV program, the first processor directs the output unit to play the TV program.

6. The electronic device as claimed in claim 1, further comprising:
a primary power unit supplying power to the electronic device; and
a battery supplying power to the first clock, and when the primary power unit does not provide power, supplying power to the first processor to output the first program alert signal.

7. The electronic device as claimed in claim 1, wherein the first predetermined time is adjustable.

8. The electronic device as claimed in claim 1, wherein the first communication unit comprises a tuner.

9. The electronic device as claimed in claim 1, wherein the first communication unit further receives a time signal from the digital TV broadcaster, and the first clock is synchronized with the time signal.

10. The electronic device as claimed in claim 1, wherein the electronic device is a digital TV.

11. An electronic device for receiving a setting of an electronic program guide (EPG) from a digital TV, the EPG received by the digital TV from a digital TV broadcaster comprising a showtime of a TV program, the setting comprising information corresponding to the TV program, the device comprising:
a second communication unit receiving the setting;
a second memory storing the setting;
a second output unit;
a second clock; and
a second processor coupled to the second communication unit, the second memory, the second output unit, and the second clock, when determining that the second clock has reached a second predetermined time corresponding to the setting before the showtime of the TV program, directing the second output unit to provide a second program alert signal.

12. The electronic device as claimed in claim 11, wherein the second output unit controlled by the second processor displays the setting stored in the second memory.

13. The electronic device as claimed in claim 12, wherein the second communication unit receives the EPG, and the second output unit controlled by the second processor displays the EPG.

14. The electronic device as claimed in claim 13, further comprising a second input unit, coupled to the second processor, serving as an interface for adding or removing the setting stored in the second memory.

15. The electronic device as claimed in claim 11, wherein the second communication unit further receives the EPG, and when the second processor compares the setting with the EPG and determines that the setting is to be updated, the second processor updates the setting according to the EPG.

16. The electronic device as claimed in claim 15, wherein after the setting is updated, the second processor directs the second output unit to provide the second program alert signal based on the updated setting.

17. The electronic device as claimed in claim 16, wherein when the updated setting states that the showtime has been canceled, the second program alert signal comprises a message that the showtime has been canceled.

18. The electronic device as claimed in claim 11, wherein the second predetermined time is adjustable.

19. The electronic device as claimed in claim 11, wherein the second communication unit further receives a time signal from the digital TV, and the second clock is synchronized with the time signal.

20. The electronic device as claimed in claim 11, wherein the electronic device is a remote control of the digital TV.

21. A program alert method, comprising the steps of:
(a) receiving an electronic program guide (EPG) which comprises a showtime of a TV program;
(b) receiving a setting which comprises information corresponding to the TV program, and storing the setting; and
(c) outputting a program alert signal when a predetermined time corresponding to the setting before the showtime of the TV program is reached.

22. The method as claimed in claim 21, between step (b) and step (c), further comprising:
(b-1) comparing the setting with the EPG, and when determining that the setting is to be updated, updating the setting according to the EPG.

23. The method as claimed in claim 22, wherein in step (b-1) if the setting is updated, in step (c) the program alert signal is outputted based on the updated setting.

24. The method as claimed in claim 23, wherein in step (b-1) if the setting is updated and shows that the showtime is canceled, in step (c) the program alert signal comprises a message that the showtime is canceled.

25. The method as claimed in claim 21, after step (c), further comprising the step of:
(d) playing the TV program when the showtime of the TV program is reached.

26. The method as claimed in claim 21, wherein the predetermined time is adjustable.
